# EUROPEAN PATENT SPECIFICATION

(11) **EP 1 344 558 B1**
(45) Date of publication and mention of the grant of the patent: **04.05.2005**
(21) Application number: 01976321.8
(22) Date of filing: 22.10.2001
(51) Int. Cl.: B01D 29/58, B01D 35/31, B01D 25/02, B01D 63/06

(54) **BODY FOR MEMBRANE FILTERS**
KÖRPER FÜR MEMBRANFILTER
CORPS POUR FILTRES DE MEMBRANE

(30) Priority: 24.11.2000 ES 200002987 U; 07.09.2001 ES 200102242 U; 07.09.2001 ES 200102246 U
(43) Date of publication of application: 17.09.2003
(73) Proprietor: Membrane Concepts S.L., 08660 Balsareny, Barcelona (ES)
(72) Inventor: THOMASSEN, Johannes A., Membrane ConceptsS.L., E-08660 Balsareny(Barcelona) (ES)
(74) Representative: Pastells Teixido, Manuel
(86) International application number: PCT/ES2001/000396
(87) International publication number: WO 2002/041968

(56) References cited:
- EP-A1- 0 487 831
- EP-A1- 0 868 941
- EP-A2- 0 381 032
- WO-A1-98/20962
- GB-A- 337 539

## Description

Different membrane filter types are already known which have a body formed for example by a spiral membrane or a microtube membrane and determining a cylinder, a shell being arranged on the periphery of said membrane in order to thus maintain the diameter of its cylindrical arrangement.

This cylinder constitutes the filtering element that is housed in a rigid tube each of whose ends is provided with an end member, to these latter being fitted the corresponding caps having the fluid inlet and outlet.

The membrane filters of this kind are preferentially used for filtering liquids.

Since in these filters the filtering element is manufactured in a separate operation it becomes difficult to later on get it to perfectly fit into the outer tube, this possibly bringing about a defective functioning of the filter.

This problem becomes more serious when the filter consists of two or more filtering elements being coaxially connected by means of connecting elements arranged between them.

The following are cited as background prior art to this type of bodies for membrane filters: European Patent No. 048731-A which relates to a filter unit with end connectors for connecting a plurality of filter units, each end connector having a base with a sealing surface and a connecting portion for another end connector; and Patent WO-9820962-A1 which relates to a filtration membrane module comprising a filter housing having external connections and a compartment in which a bundle of filtration membranes are provided, the filter body being made from PVC.

This invention has as its object a membrane filter body having a low manufacturing cost and comprising two or more filtering elements with the corresponding connecting elements between them and with the end members, said assembly having its periphery snugly fitted to the outer shell thus determining a notable efficiency of the filter.

This membrane filter body is characterised in that said assembly being made up by the filter components is surrounded by a fibreglass and resin layer moulded on it, said layer when having hardened forming the rigid outer surface of said cylindrical body.

Near each of its ends the outer surface of said cylindrical body will be preferably provided with a corresponding peripheral slot being apt to facilitate the connection between two of these bodies, as well as that of the end caps being respectively provided with the inlet and outlet for the liquid to be filtered.

For those cases requiring said connections to be mechanically stronger each of the ends of the cylindrical body has been provided wit a peripheral projecting ridge next to each of said peripheral slots.

For said connections the cylindrical body of the filter will in some cases be provided with only said peripheral projecting ridges.

It has also been foreseen to improve said connections so that they can be apt to be fitted to commercial fittings, the peripheral slots being for such a purpose provided near the ends of the inner surface of the cylindrical body, a metallic stiffener being provided in those cases requiring the connections to be mechanically stronger.

These and other characteristics will be best made apparent by the following detailed description whose understanding will be made easier by the accompanying three sheets of drawings showing some practical embodiments cited only by way of example not limiting the scope of the present invention.

In the drawings:
Fig. 1 illustrates in a diagrammed longitudinal section the assembly being made up by three filtering elements;
Fig. 2 shows in a diagrammed longitudinal section the above-mentioned assembly being provided with the cylindrical outer shell;
Fig. 3 represents the filtering body in a side view;
Fig. 4 shows in a diagrammed front elevation the configuration of the connecting elements being provided between the filtering elements, and that of the end members;
Figs. 5 and 6 in a diagrammed longitudinal section and in a side view respectively represent the end region of the filter body being provided with said peripheral projecting ridge and slot;
Fig. 7 shows in a side view the end region of the filter body with only the peripheral projecting ridge;

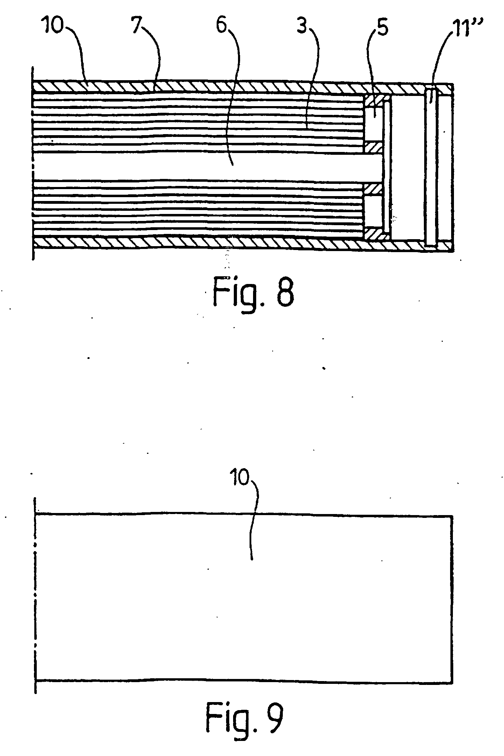

Fig. 8 represents in a diagrammed longitudinal section the end region of the filter body with the above-mentioned inner slot; and
Fig. 9 in a side view shows the end region of the filter body as per Fig. 8.

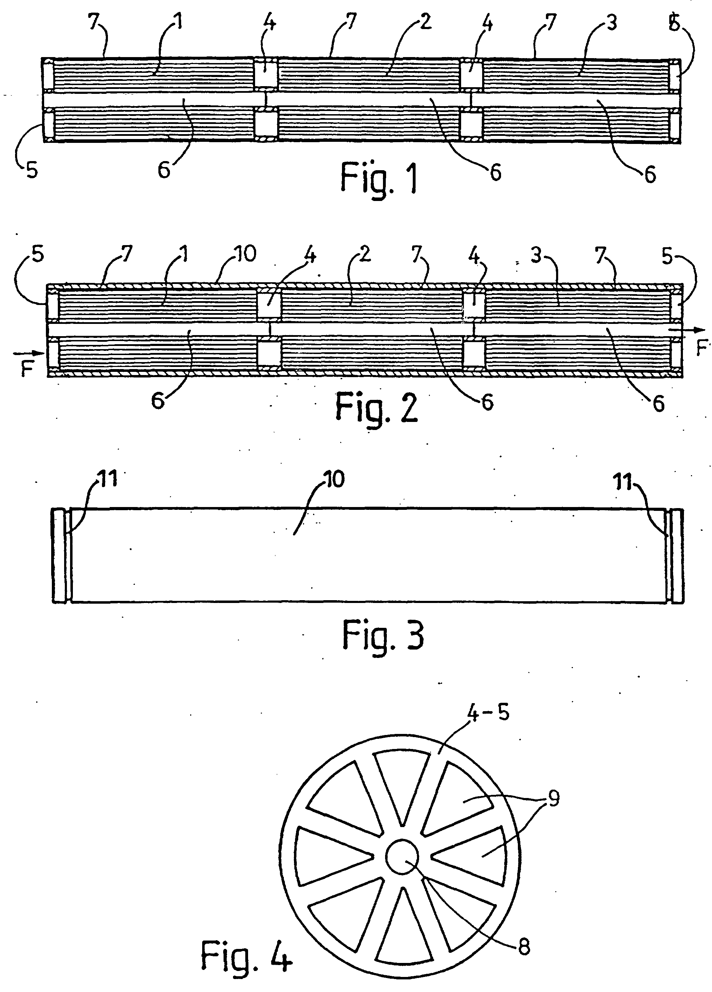

According to the drawings the membrane filter body comprises several components formed by three filtering elements 1, 2 and 3 being coaxially connected to each other by means of connecting elements 4 thus forming an assembly having each of its ends provided with an end member 5, said assembly being shown in Fig. 1.

The filtering elements are formed by a spiral membrane being wrapped on a tube 6 thus forming a cylinder in its turn being wrapped in a tape 7 being wound on its periphery in order to thus maintain the cylindrical arrangement of the spiral membrane.

The connecting elements 4 and the end members 5 have a circular configuration with a central orifice 8 and radial openings 9 (Fig. 4).

The assembly having been made up by the above-mentioned components forms a cylinder that is surrounded by a fibreglass and resin layer 10 being moulded on said cylinder, said layer when having hardened thus forming the rigid and cylindrical outer surface of this membrane filter body, a corresponding cap (not shown) being respectively provided with the inlet and outlet for the liquids to be filtered being fitted to each of the ends of said body, the periphery of said filter body near each of its ends having been provided with a slot 11 in order to facilitate said fitting.

Said layer 10 will be preferably moulded on the assembly comprising the above-mentioned components by means of winding a resin-impregnated glass filament, said winding thus determining the thickness of said layer according to the requirements to be met by the filter and above all in correspondence with its operating pressure.

In this kind of membrane filters the liquid to be filtered flows in through one of the end faces of the filter body as per arrow F, and the filtered liquid flows out through the axial tube as indicated by arrow F'.

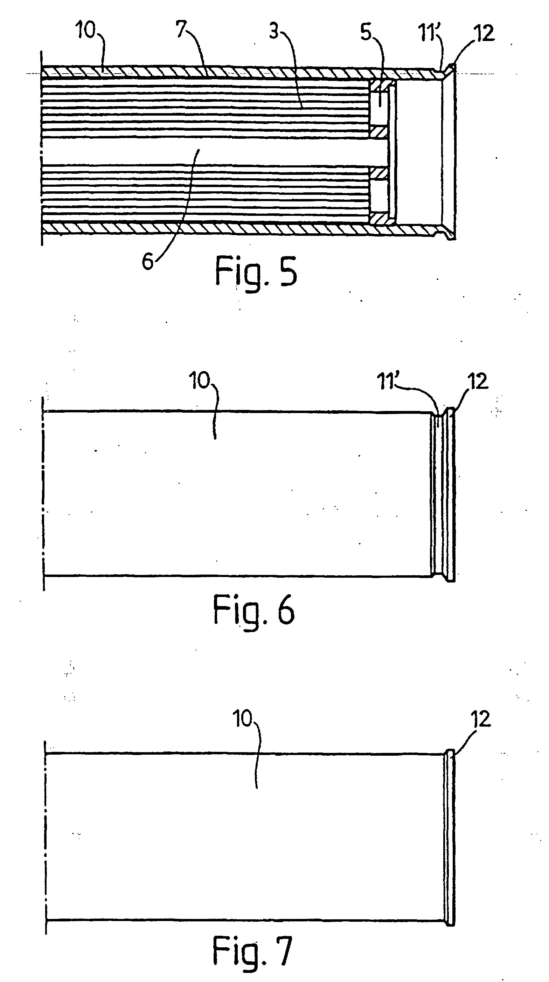

For the connection of the caps to the filter bodies and between said bodies each of these latter's ends has been provided with a peripheral projecting ridge 12 next to each of the peripheral slots 11' (Figs. 5 and 6) or with only a projecting ridge 12 (Fig. 7).

For said connections a peripheral slot 11" has been as well provided in the inner surface and near the ends of the filter bodies.

## Claims

1. A membrane filter body, comprising several components formed by at least two filtering elements (1), (2) and (3) being coaxially connected to each other by means of connecting elements (4) thus forming an assembly having each of its ends provided with an end member (5), **characterized in that** this assembly has been made up by said components being surrounded by a fibreglass and resin layer (10) being moulded on it, said layer when having hardened thus forming the rigid and cylindrical outer surface of said membrane filter body.

2. A membrane filter body as per claim 1, **characterised in that** near each of its ends its outer surface is provided with a peripheral slot (11) being apt to facilitate the connection between two bodies, as well as that of the end caps being fitted to the filter.

3. A membrane filter body as per claim 1, **characterised in that** at each of its ends its outer surface has been provided with a peripheral projecting ridge (12) being apt to facilitate the connection between two bodies, as well as that of the end caps being fitted to the filter.

4. A membrane filter body as per claim 3, **characterised in that** next to each of said projecting ridges (12) its outer surface has been provided with a peripheral slot (11').

5. A membrane filter body as per claim 1, **characterised in that** near each of its ends its inner surface has been provided with a peripheral slot (11") being apt to facilitate the connection between two bodies and that of the end caps.

## Patentansprüche

1. Membranfilterkörper der mehrere aus mindestens zwei Filterelementen (1), (2) und (3) bestehenden Bestandteile umfaßt, wobei die obengenannten Filterelemente mit Verbindungselementen (4) axial miteinander verbunden sind und so eine an ihren Enden mit je einem Endstück (5) abgeschlossene Gesamtanordnung bilden; **dadurch gekennzeichnet, daß** diese aus den obengenannten Bestandteilen bestehende Gesamtanordnung von einer auf ihr aus Glasfaser und Harz abgeformten Schicht (10) umschlossen ist, wobei diese letztere nach ihrer Aushärtung die steife, zylindermantelförmige Außenfläche des Membranfilterkörpers bildet.

2. Membranfilterkörper nach Anspruch 1, **dadurch gekennzeichnet, daß** seine Außenfläche in der Nähe von ihren Enden je eine umlaufende Nut (11) aufweißt, die die Verbindung zwischen zwei Körpern und die der Filterendkappen erleichtern wird.

3. Membranfilterkörper nach Anspruch 1, **dadurch gekennzeichnet, daß** seine Außenfläche an ihren Enden je einen umlaufenden Vorsprung (12) aufweißt, der die Verbindung zwischen zwei Körpern und die der Filterendkappen erleichtern wird.

4. Membranfilterkörper nach Anspruch 3, **dadurch gekennzeichnet, daß** seine Außenfläche neben den obengenannten Vorsprüngen (12) je eine umlaufende Nut (11') aufweißt.

5. Membranfilterkörper nach Anspruch 1, **dadurch gekennzeichnet, daß** seine Außenfläche in der Nähe von ihren Enden je eine umlaufende Nut (11'') aufweißt, die die Verbindung zwischen zwei Körpern und die der Filterendkappen erleichtern wird.

## Revendications

1. Corps pour filtres à membrane qui comprend plusieurs composants formés au moins par deux éléments filtrants (1), (2) et (3) accouplés coaxialement entre eux avec des éléments de connexion (4), constituant ainsi un ensemble dont chacune des extrémités finit par une pièce de terminaison (5); **caractérisé en ce que** cet ensemble de composants est entouré par une couche de fibre de verre et résine (10) moulée sur lui et qui, une fois endurcie, constitue la surface extérieure rigide et cylindrique dudit corps pour filtres à membrane.

2. Corps pour filtres à membrane, d'après la revendication 1, carctérisé en ce que, proche de chacune de ses extrémités, sa surface extérieure présente une rainure périphérique (11) qui facilitera l'accouplement entre deux corps, ainsi que celui des têtes extrêmes du filtre.

3. Corps pour filtres à membrane, d'après la revendication 1, **caractérisé en ce que**, dans chacune de ses extrémités, sa surface extérieure présente un ressaut périphérique (12) qui facilite l'accouplement entre deux corps, ainsi que celui des têtes extrêmes du filtre.

4. Corps pour filtres à membrane, d'après la revendication 3, **caractérisé en ce que**, à côté de chacun desdits ressauts (12), sa surface extérieure présente une rainure périphérique (11').

5. Corps pour filtres à membrane, d'après la revendication 1, **caractérisé en ce que**, proche de chacune de ses extrémités, sa surface intérieure présente une rainure périphérique (11'') qui facilitera l'accouplement entre deux corps, ainsi que celui des têtes extrêmes.
